# EUROPÄISCHE PATENTSCHRIFT

(11) **EP 3 749 700 B1**
(45) Veröffentlichungstag und Bekanntmachung des Hinweises auf die Patenterteilung: **30.03.2022**
(21) Anmeldenummer: 19702428.4
(22) Anmeldetag: 30.01.2019
(51) Int. Cl.: C08G 18/50, C08G 18/62, C08G 18/69, C08G 18/79, C08G 18/80, C08G 18/48

(54) **MIT AKTINISCHER STRAHLUNG FIXIERBARE MASSE UND IHRE VERWENDUNG**
MASS FIXABLE BY ACTINIC RADIATION, AND USE OF SAID MASS
MASSE POUVANT ÊTRE FIXÉE PAR RAYONNEMENT ACTINIQUE ET SON UTILISATION

(30) Priorität: 09.02.2018 DE 102018102916
(43) Veröffentlichungstag der Anmeldung: 16.12.2020
(73) Patentinhaber: DELO Industrie Klebstoffe GmbH & Co. KGaA, 86949 Windach (DE)
(72) Erfinder: EHRET, Markus, 86949 Windach (DE); HENSCHEL, Andeas, 86949 Windach (DE)
(74) Vertreter: Prinz & Partner mbB
(86) Internationale Anmeldenummer: PCT/EP2019/052174
(87) Internationale Veröffentlichungsnummer: WO 2019/154676

(56) Entgegenhaltungen:
- DE-A1-102004 057 916
- US-A1- 2003 119 976

## Beschreibung

### GEBIET DER ERFINDUNG

Die vorliegende Erfindung betrifft lagerstabile, durch aktinische Strahlung fixierbare und durch Wärme härtbare Einkomponentenmassen auf Basis von Isocyanaten.

Darüber hinaus betrifft die Erfindung ein Verfahren zum Fügen, Beschichten oder Vergießen von Substraten unter Verwendung der Masse.

### HINTERGRUND DER ERFINDUNG

Im Bereich der Elektronik werden die einzelnen Bauelemente immer stärker miniaturisiert, was zur Folge hat, dass Verklebungen, Vergüsse und Beschichtungen sehr präzise ausgeführt werden müssen. Zudem müssen Klebstoffe für Elektronikanwendungen einer Vielzahl weiterer Anforderungen gerecht werden. So werden beispielsweise im Bereich der mikroelektro-mechanischen Systeme (MEMS) Massen gefordert, die auch bei niedrigen Temperaturen bis hin zu -40 °C hochflexibel sind. Nur so kann die gewünschte mechanische Entkopplung des MEMS-Bauelements vom Substrat mit Hilfe des Klebstoffs gelingen. Ohne eine ausreichende Entkopplung sind keine zufriedenstellenden Signalqualitäten erreichbar, was vor allem für Sensor- oder Mikrofonanwendungen nachteilig ist.

Eine etablierte Lösung stellen Massen auf Silikonbasis dar. Diese besitzen eine hohe thermische Stabilität und eine hohe Flexibilität bei tiefen Temperaturen. In einigen technischen Anwendungen sind Silikonmaterialien jedoch unerwünscht, da Löt- und Lackierprozesse durch Verunreinigungen mit cyclischen Siloxanen gestört werden können. Zudem weisen Silikone ein hohes Spreitvermögen auf, so dass sich die Silikone in miniaturisierten Strukturen nur schwierig verarbeiten lassen und ein hoher technischer Aufwand betrieben werden muss, um eine Ausbreitung der Silikone auf die gewünschte Fläche zu begrenzen.

Im Stand der Technik existieren viele chemische Alternativen zu Silikonen, wie beispielsweise Polyurethanmassen, deren Flexibilität sehr gut einstellbar ist. Einkomponentige, warmhärtende Massen sind durch den Einsatz von festen oberflächenpassivierten Isocyanaten zugänglich. Eine oberflächliche Verkapselung von festen Isocyanaten kann beispielsweise durch Umsetzung der Isocyanate mit Aminen erreicht werden. Dadurch lassen sich isocyanathaltige Verbindungen in eine Form überführen, in der diese gegenüber Sauerstoff- oder Stickstoff-Nukleophilen bei Raumtemperatur über einen gewissen Zeitraum stabil bleiben. Zur Anwendung kommt dieses Prinzip in reaktiven Schmelzklebstoffen oder in einkomponentigen Polyurethan-Dispersionsklebstoffen.

Die EP 0 100 508 B1 offenbart ein Verfahren zur Herstellung von einkomponentigen, lagerstabilen und warmhärtbaren Zusammensetzungen, die ein oberflächenpassiviertes Polyisocyanat und mindestens einen isocyanatgruppenreaktiven Härter umfassen, der aus der Gruppe der amin-, hydrazid- oder thiolgruppenhaltigen Verbindungen ausgewählt sein kann. Die beschriebenen Zusammensetzungen sind über einen Zeitraum von mindestens 3 Monaten bei Raumtemperatur lagerstabil.

Die EP 0 153 579 B1 beschreibt die Verwendung von warmhärtenden einkomponentigen Polyurethanharnstoff-Massen. Die Massen enthalten feinteilige Polyisocyanate mit einem Schmelzpunkt > 40 °C, die durch Reaktion mit Polyaminen, Hydrazin, Alkylhydrazinen, Hydraziden, Amidinen und/oder Guanidinen an der Oberfläche passiviert wurden.

Beim Erwärmen neigen die bekannten Zusammensetzungen jedoch zu einem Zerfließen. Eine Fixierung der Masse in ihrer Form, auch unter der Last eines Bauteils, ist vor der Warmhärtung nicht möglich.

Aus der EP 1 082 399 B1 sind latent reaktive Schmelzklebstoffe bekannt, die mindestens ein festes oberflächenpassiviertes Polyisocyanat, ein isocyanatreaktives Polymer und einen Zugschlagstoff enthalten, der aus der Gruppe der Trockenmittel ausgewählt sein kann. Die EP 1 386 936 A1 beschreibt ein Verfahren zur Herstellung eines reaktiven Schmelzklebstoffes, bei dem die isocyanatreaktive Komponente selbst ein Umsetzungsprodukt einer isocyanathaltigen Verbindung mit Monomeren oder Präpolymeren darstellt, die Hydroxyl- oder Aminogruppen enthalten. Die Schmelzklebstoffe liegen bei Raumtemperatur naturgemäß in fester Form vor und können nicht unmittelbar dosiert werden.

Die EP 1 681 324 A2 beschreibt sogenannte "Dual Cure" Systeme, die ein blockiertes Isocyanat als Vernetzer und eine radikalisch polymerisierbare Verbindung enthalten. Die blockierten Isocyanate haben den Nachteil, dass das Blockierungsmittel abgespalten werden muss, um eine Warmhärtung der Systeme zu erreichen. Das abgespaltene Blockierungsmittel kann aus der Masse herausdiffundieren und dadurch umweltschädliche und gesundheitlich bedenkliche Ausgasungen verursachen.

Die DE 10 048 849, EP 0 928 800 und DE 19 818 735 beschreiben jeweils Mehrkomponentenmassen aus isocyanatreaktiven Verbindungen, Isocyanaten und mit aktinischer Strahlung härtbaren Verbindungen, die zur Umsetzung miteinander erst kurz vor Verarbeitung der Massen gemischt werden. Die Umsetzung erfolgt in Gegenwart von Katalysatoren wie zinnhaltigen Metallkatalysatoren. Die beschriebenen Massen lassen sich zwar in Gegenwart eines Photoinitiators durch Bestrahlung fixieren. Jedoch weisen die Massen nur kurze Offenzeiten auf und können nicht als lagerstabile Einkomponentenmasse formuliert werden.

Die US 2003 / 119 976 A1 offenbart oberflächendesaktivierte Feststoffisocyanate, die durch eine Reaktion feinteilig dispergierter Feststoffisocyanate mit anionischen oder zur Anionenbildung befähigten Gruppen tragenden Mono- oder Polyaminen, die über primäre und/oder sekundäre Aminogruppen verfügen, erhältlich sind.

Somit besteht weiter Bedarf an bei Raumtemperatur dosierfähigen Einkomponentenmassen, insbesondere zum Fügen, Beschichten oder Vergießen von elektronischen Bauteilen, die neben einer hohen Flexibilität der ausgehärteten Masse auch eine Fixiermöglichkeit vor dem Aushärteschritt bieten, um die Form und Position des Klebstoffs und der Fügepartner genau einstellen zu können.

### ZUSAMMENFASSUNG DER ERFINDUNG

Der Erfindung liegt die Aufgabe zugrunde, die Nachteile der aus dem Stand der Technik bekannten Zusammensetzungen zu vermeiden und einkomponentige, bei Raumtemperatur flüssige und gleichzeitig lagerstabile Massen bereitzustellen, die warmhärtend und zusätzlich durch aktinische Strahlung fixierbar sind. Die Flexibilität der ausgehärteten Massen soll über einen weiten Bereich frei einstellbar sein.

Diese Aufgabe wird erfindungsgemäß durch eine einkomponentige härtbare Masse gemäß Anspruch 1 gelöst. Vorteilhafte Ausführungsformen sind in den Unteransprüchen angegeben, die wahlweise miteinander kombiniert werden können.

Die erfindungsgemäße Masse umfasst (A) ein mindestens difunktionelles, festes Isocyanat mit einer passivierten Oberfläche und mit einem Schmelzpunkt von mindestens 40 °C; (B) eine isocyanatreaktive Komponente, die aus der Gruppe der Alkohole, Amine und Thiole sowie deren Mischungen ausgewählt ist; (C) eine strahlungshärtbare Verbindung mit wenigstens einer radikalisch polymerisierbaren Gruppe; und (D) einen Photoinitiator für die radikalische Polymerisation. Wahlweise können in der erfindungsgemäßen Masse weitere Zusatzstoffe (E) enthalten sein.

Die Masse ist bei Raumtemperatur flüssig und zeichnet sich durch eine hohe Variabilität der zur Formulierung verwendeten Komponenten in Verbindung mit der Möglichkeit zur Lichtfixierung aus. Durch Auswahl von Alkoholen als isocyanatreaktive Komponente können im gehärteten Produkt beispielsweise Polyurethannetzwerke aufgebaut werden. Im Falle von Aminen als Härter lassen sich Harnstoffnetzwerke erzeugen. Durch die Auswahl von Thiolen sind Thiourethannetzwerke erhältlich. Die hohe Variabilität der Formulierung erlaubt dem Anwender somit, eine breite Eigenschaftspalette in den gehärteten erfindungsgemäßen Massen abzubilden.

Der wesentliche Vorteil gegenüber dem Stand der Technik besteht darin, dass die Massen mittels aktinischer Strahlung fixierbar sind, einkomponentig formuliert werden können und gleichzeitig eine hohe Lagerstabilität bei Raumtemperatur aufweisen.

Für Anwendungen in mikroelektro-mechanischen Systemen (MEMS) vorgesehene Massen weisen bevorzugt eine Glasübergangstemperatur von -20 °C oder weniger auf.

Die Erfindung betrifft ferner ein Verfahren zum Fügen, Beschichten und Vergießen von Substraten unter Verwendung der erfindungsgemäßen Masse. Durch Bestrahlung lässt sich die Masse in einen formstabilen Zustand, insbesondere einen sogenannten B-Stage Zustand, überführen und zeitlich entkoppelt von der Bestrahlung in nachfolgenden Prozessschritten abschließend warm härten.

### AUSFÜHRLICHE BESCHREIBUNG DER ERFINDUNG

Die Erfindung wird im Folgenden ausführlich und beispielhaft anhand von bevorzugten Ausführungsformen beschrieben, die jedoch nicht in einem einschränkenden Sinn verstanden werden sollen. In der Beschreibung werden die folgenden Definitionen verwendet:
"Einkomponentig" oder "Einkomponentenmasse" bedeutet im Sinne der Erfindung, dass die genannten Komponenten zusammen in einer gemeinsamen Formulierung vorliegen, also nicht getrennt voneinander gelagert sind.
"Lagerstabil" bedeutet hier und im Folgenden, dass sich die Viskosität der Masse bei einer Lagerung bei Raumtemperatur über einen Zeitraum von 7 Tagen um höchstens 100% erhöht. Bevorzugt beträgt der Viskositätsanstieg über einen Zeitraum von 14 Tagen höchstens 100%.
"Flüssig" bedeutet im Sinne der Erfindung, dass bei Raumtemperatur das durch rheologische Messung ermittelte Verlustmodul G" größer als das Speichermodul G' der betreffenden Masse ist.
"Mindestens Difunktionell" oder "Polyfunktionell" bedeutet, dass die jeweilige Verbindung oder Stoffmischung eine Funktionalität von mindestens 2 aufweist, bezogen auf eine bestimmte funktionelle Gruppe. Mindestens difunktionelle oder polyfunktionelle Isocyanate weisen somit mindestens zwei Isocyanatgruppen (-NCO) im Molekül auf.

Soweit der unbestimmte Artikel "ein" oder "eine" verwendet wird, ist damit auch die Pluralform "ein oder mehrere" umfasst, soweit diese nicht ausdrücklich ausgeschlossen wird.

Alle im Folgenden aufgeführten Gewichtsanteile beziehen sich jeweils auf das Gesamtgewicht der härtbaren Masse, einschließlich der reaktiven Komponenten (A) bis (D) und der nicht reaktiven Zusatzstoffe (E) wie beispielsweise Füllstoffe oder Weichmacher.

### Komponente (A): Mindestens difunktionelles festes Isocyanat

Als festes, mindestens difunktionelles Isocyanat (A) kann grundsätzlich jedes mindestens difunktionelle Isocyanat eingesetzt werden, das einen Schmelzpunkt von mindestens 40 °C aufweist. Bevorzugt weist das mindestens difunktionelle Isocyanat einen Schmelzpunkt von mindestens 60 °C auf.

Das Isocyanat ist bevorzugt ein aliphatisches, cycloaliphatisches, heterocyclisches oder aromatisches Polyisocyanat. Als Beispiele für geeignete Polyisocyanate seien genannt: dimeres 2,4-Diisocyanatotoluol, dimeres 4,4'-Diisocyanatodiphenylmethan, 3,3'-Diisocyanato-4,4'-dimethyl-N,N'-diphenyl-harnstoff, das Isocyanurat des Isophorondiisocyanat, 1,4-Phenylendiisocyanat, Naphthalin-1,5-diisocyanat, sowie Additionsprodukte von Diisocyanaten mit kurzkettigen Diolen wie beispielsweise 1,4-Butandiol oder 1,2-Ethandiol. Bevorzugt sind dimeres 2,4-Diisocyanatotoluol, dimeres 4,4'-Diisocyanatodiphenylmethan, 3,3'-Diisocyanato-4,4'-dimethyl-N,N'-diphenylharnstoff und/oder das Isocyanurat des Isophorondiisocyanat.

Die Isocyanate können allein oder im Gemisch von zweien oder mehreren der Polyisocyanate eingesetzt werden.

Zur Bereitstellung lagerstabiler Massen wird das feste Polyisocyanat an seiner Oberfläche passiviert, um die sofortige Reaktion des festen Isocyanats mit der in der Einkomponentenmasse vorliegenden isocyanatreaktiven Komponente (B) zu verhindern.

Zur Passivierung kann die Oberfläche des festen Isocyanats mit einer inerten Partikelschicht belegt werden, beispielsweise aus nanoskaligem Titandioxid, wie in der DE 60 126 313 T2 beschrieben. Bevorzugt wird das feste Polyisocyanat jedoch an seiner Oberfläche mit einem Passivierungsmittel umgesetzt, wie beispielsweise in der EP 0 153 579 A2 oder der EP 0 100 508 B1 beschrieben.

Durch die Umsetzung des festen Polyisocyanats mit dem Passivierungsmittel bildet sich an dessen Oberfläche eine im Wesentlichen inerte Hülle aus, welche die weitere Reaktion der unter der Hülle liegenden Isocyanatgruppen verhindert, bis durch Zufuhr von Wärme die Hülle aufgebrochen wird, so dass die einkomponentige Masse aushärtet.

Bevorzugte Passivierungsmittel sind Verbindungen aus der Gruppe der Polyamine, Amidin- und/oder Guanidin-Verbindungen, Hydrazin, Alkylhydrazine und/oder Hydrazidverbindung, die mit den an der Oberfläche des festen Polyisocyanats befindlichen Isocyanatgruppen unter Ausbildung von Harnstoffgruppen reagieren.

Besonders bevorzugt werden primäre, aliphatische, mindestens difunktionelle Amine mit einem Molekulargewicht von 60 - 600 g/mol als Passivierungsmittel eingesetzt, und ganz besonders bevorzugt Polyetheramine, wie sie im Handel beispielsweise unter der Bezeichnung Jeffamine^{®} D-400 oder Jeffamine^{®} T-403 von Huntsman Corporation erhältlich sind.

Zur Passivierung werden bevorzugt 0,1 - 25 mol% aller im festen Polyisocyanat vorhandenen Isocyanatgruppen mit dem Passivierungsmittel umgesetzt, weiter bevorzugt 0,5 - 15 mol% und besonders bevorzugt 1 - 10 mol%. Die Umsetzung erfolgt bevorzugt unter Ausbildung von Harnstoffgruppen. Besonders bevorzugt wird das in Form von mikronisierten Teilchen vorliegende feste Polyisocyanat mit dem Passivierungsmittel bei einer Temperatur unterhalb des Schmelzpunktes des festen Polyisocyanats in einem flüssigen Medium umgesetzt, das selbst kein gutes Lösungsmittel für das Polyisocyanat ist. Als flüssiges Medium können insbesondere höhermolekulare Polyole oder Polyamine mit einem Molekulargewicht von bis zu 6000 g/mol dienen, die in den erfindungsgemäßen Massen selbst als isocyanatreaktive Komponente eingesetzt werden können.

Gemäß einer bevorzugten Ausführungsform liegt das oberflächenpassivierte, feste Polyisocyanat in feinteiliger Form vor. Dadurch kann bei Zufuhr von Wärme eine homogen gehärtete Masse erhalten werden. Bevorzugt liegt das feste Polyisocyanat in Form von Teilchen mit einem mittleren Teilchendurchmesser (numerisch) von maximal 100 µm, bevorzugt höchstens 40 µm und ganz bevorzugt höchstens 10 µm vor.

Durch Auswahl verschiedener Polyisocyanate und der zugehörigen Härtersysteme lassen sich mit den erfindungsgemäßen Massen sowohl harte, als auch sehr weiche Systeme formulieren, die über große Temperaturbereiche einen nahezu unveränderten E-Modulverlauf zeigen.

Der Anteil des oberflächenpassivierten, mindestens difunktionellen Isocyanats in der erfindungsgemäßen Masse beträgt bevorzugt etwa 5 bis 40 Gewichtsprozent.

### Komponente (B): Isocyanatreaktive Komponente

Neben der Komponente (A) enthalten die erfindungsgemäßen Massen als Komponente (B) mindestens eine isocyanatreaktive Komponente, die aus der Gruppe der Alkohole, Amine und Thiole sowie Mischungen davon ausgewählt ist. Beim Erwärmen der Masse reagiert die Komponente (B) mit dem Polyisocyanat (A) unter Ausbildung eines Netzwerks und Aushärtung der Masse.

Die Komponente (B) ist bevorzugt flüssig und in Bezug auf ihre chemische Konstitution nicht weiter eingeschränkt. Bevorzugt trägt die Komponente (B) isocyanatreaktive Gruppen mit einer mittleren Funktionalität größer als 1. Besonders bevorzugt werden Polyole, Polyamine und/oder Polythiole mit einer Funktionalität von mindestens 2 als isocyanatreaktive Verbindungen eingesetzt. Mischungen unterschiedlicher isocyanatreaktiver Verbindungen sind ebenfalls im Sinne der Erfindung.

Die mittlere Funktionalität der Komponente (B) und damit auch die Vernetzungsdichte lässt sich nahezu beliebig durch Kombination von monofunktionellen, di- und höherfunktionellen isocyanatreaktiven Verbindungen einstellen, solange sich unter Wärmezufuhr durch die Additionsreaktion an das mindestens difunktionelle Isocyanat (A) ein polymeres Netzwerk ausbildet. Bevorzugt ist die mittlere Funktionalität mindestens 1,4 und besonders bevorzugt mindestens 1,7; bevorzugt aber auch nicht größer als 5 und insbesondere nicht größer als 4.

Die gehärteten Massen können gezielt mit Hart- und Weichsegmenten ausgebildet werden. Zur Ausbildung von Hartsegmenten werden bevorzugt isocyanatreaktive Komponenten (B) mit einem Molekulargewicht bis etwa 400 g/mol als sogenannte Kettenverlängerer eingesetzt, die mit dem mindestens difunktionellen Isocyanat eine hohe Dichte an Verknüpfungsgruppen wie (Thio)urethan- oder Harnstoffgruppen bilden, welche dann über ein dichtes Netzwerk aus Wasserstoffbrücken miteinander verknüpfen. Zur Ausbildung von Weichsegmenten umfasst die Komponente (B) bevorzugt langkettige isocyanatreaktive Verbindungen mit einem Molekulargewicht von etwa 400 g/mol bis etwa 20.000 g/mol.

Die isocyanatreaktiven Verbindungen können auch bereits mit flüssigen, nicht passivierten Isocyanaten unter Bildung von Präpolymeren vorverlängert sein.

In isocyanathaltigen Systemen kann Wasser in Konkurrenz zu den isocyanatreaktiven Gruppen treten und zu unerwünschter Blasenbildung führen. Die Komponente (B) umfasst oder besteht daher bevorzugt aus einer hydrophoben isocyanatreaktiven Verbindung.

Bevorzugt umfasst die Komponente (B) ein Polyol, besonders bevorzugt ein langkettiges Polyol mit einem mittleren Molekulargewicht Mₙ von 400 bis 20.000 g/mol. Beispiele für geeignete langkettige Polyole sind Polyole auf Basis von Polyethern, im Handel erhältlich als Acclaim^{®}-Typen, Polyestern und Polycarbonaten, erhältlich als Kuraray^{®}- oder Priplast^{™}-Typen, sowie ferner Polyole auf Basis von Polybutadienen und hydrierten Polybutadienen, erhältlich als Krasol^{®}-Polyvest^{®}- oder Nisso-PB^{®}-Typen.

Langkettige Polyole mit einem mittleren Molekulargewicht von 2000 bis 20.000 g/mol eignen sich besonders für die Herstellung von Massen, die nach Aushärtung eine hohe Flexibilität bei niedrigen Temperaturen und eine niedrige Glasübergangstemperatur aufweisen.

Als Kettenverlängerer kann die Komponente (B) mindestens ein niedermolekulares Polyol mit einem Molekulargewicht von bis zu 400 g/mol umfassen, wie beispielsweise Glykol, Glycerin, 1,4-Butandiol oder 2-Ethyl-1,3-hexandiol.

Als Amin in der Komponente (B) können Polyetheramine mit einem Molekulargewicht von 600 g/mol oder größer verwendet werden, wie sie beispielsweise als Jeffamin^{®} D-2000 oder Jeffamin^{®} T-5000 erhältlich sind. Bevorzugt sind weiter höhermolekulare aromatische Amine mit einem mittleren Molekulargewicht von 400 g/mol bis 12.000 g/mol, die gemäß der EP 0 071 834 A1 durch alkalische Hydrolyse von Verbindungen mit endständigen Isocyanatgruppen erhalten werden können, insbesondere aus Isocyanat-Präpolymeren. Geeignete aromatische Diamine sind unter der Bezeichnung Versalink^{®} P-650 und Versalink^{®} P-1000 im Handel erhältlich. Als Kettenverlängerer können außerdem aromatische Diamine wie z.B. Diethylentoluoldiamin eingesetzt werden.

Als Thiole zur Verwendung in der Komponente (B) eignen sich beispielsweise esterbasierte Thiole wie Trimethylolpropan-tris-(3-mercaptopropionat) oder Pentaerythritol-tetrakis-(3-mercaptobutylat). Ferner können mit Thiolgruppen terminierte Polyether als isocyanatreaktive Komponente verwendet werden, ebenso wie Thiolgruppen tragende Polythioether oder auch Tris-(3-mercaptopropyl)-isocyanurat.

Die isocyanatreaktive Komponente (B) liegt in der erfindungsgemäßen Masse bevorzugt in einem Anteil von 2 bis 85 Gewichtsprozent vor, weiter bevorzugt in einem Anteil von 40 bis 85 Gewichtsprozent. Die Anteile können je nach Funktionalität und Molekulargewicht der isocyanatreaktiven Komponente in einem weiten Bereich variieren.

### Komponente (C): strahlungshärtbare Verbindung

Zusätzlich zu den Komponenten (A) und (B) umfasst die erfindungsgemäße Masse mindestens eine strahlungshärtbare Verbindung (C). Die strahlungshärtbare Verbindung (C) dient dazu, die Lichtfixierbarkeit der Masse zu gewährleisten.

Die strahlungshärtbare Verbindung (C) trägt mindestens eine radikalisch polymerisierbare Gruppe sowie wahlweise mindestens eine isocyanatreaktive Gruppe. Als Komponente (C) können daher sowohl Verbindungen (C1) verwendet werden, die neben mindestens einer radikalisch polymerisierbaren Gruppe keine isocyanatreaktive Gruppe im Molekül aufweisen, als auch Verbindungen (C2), die neben mindestens einer radikalisch polymerisierbaren Gruppe zusätzlich mindestens eine isocyanatreaktive Gruppe enthalten. Durch die Auswahl einer Verbindung (C2) kann eine chemische Vernetzung zwischen dem durch Bestrahlen mit aktinischer Strahlung aus der strahlungshärtbaren Verbindung gebildeten Netzwerk und dem durch Wärmezufuhr aus den Komponenten (A) und (B) gebildeten Netzwerk erfolgen.

Die radikalisch polymerisierbare Gruppe in der Verbindung (C) ist bevorzugt eine Alkengruppe, besonders bevorzugt eine endständige Alkengruppe und ganz besonders bevorzugt eine (Meth)acrylatgruppe. Mit dem Begriff "(Meth)acrylat" werden hier und im Folgenden die Derivate der Acrylsäure und der Methacrylsäure bezeichnet. Im Übrigen ist die strahlungshärtbare Verbindung (C) hinsichtlich ihrer chemischen Grundstruktur nicht weiter eingeschränkt und kann beispielsweise eine aromatische, aliphatische oder cycloaliphatische Verbindung sein.

Bei Anwesenheit von Thiolen kann die radikalische Polymerisation auch über einen Thiol-En-Mechanismus verlaufen.

Die folgenden Verbindungen können als Beispiel für strahlungshärtbare Verbindungen (C1) genannt werden, die mindestens eine radikalisch polymerisierbare Gruppe und keine isocyanatreaktive Gruppe tragen: Isobornylacrylat, Stearylacrylat, Tetrahydrofurfurylacrylat, Cyclohexylacrylat, 3,3,5-Trimethylcyclohexanolacrylat, Behenylacrylat, 2-Methoxyethylacrylat und andere ein- oder mehrfach alkoxylierte Alkylacrylate, Isobutylacrylat, Isooctylacrylat, Laurylacrylat, Tridecylacrylat, Isostearylacrylat, 2-(o-Phenylphenoxy)ethylacrylat, Acryloylmorpholin, N,N-Dimethylacrylamid, 4-Butandioldiacrylat, 1,6-Hexandioldiacrylat, 1,10-Decandioldiacrylat, Tricyclodecandimethanoldiacrylat, Dipropylenglycoldiacrylat, Tripropylenglycoldiacrylat, Polybutadiendiacrylat, Cyclohexandimethanoldiacrylat, Diurethanacrylate von monomeren, oligomeren oder polymeren Diolen und Polyolen, Trimethylolpropantriacrylat (TMPTA), und Dipentaerythritolhexaacrylat (DPHA). Auch von mehrfach verzweigten oder dendrimeren Alkoholen abgeleitete höherfunktionelle Acrylate können vorteilhaft verwendet werden.

Die analogen Methacrylate der vorgenannten Verbindungen sind ebenfalls im Sinne der Erfindung.

Weiterhin eignen sich auch Verbindungen mit Allylgruppen, wie sie beispielsweise im 1,3,5-Tri-2-propenyl-1,3,5-triazin-2,4,6(1H,3H,5H)-trion, (Triallylisocyanurat) enthalten sind, das kommerziell unter der Bezeichnung TAICROS^{®} erhältlich ist. Auch die ungesättigten nicht-hydrierten Polybutadiene wie beispielsweise die Poly BD^{®}-Typen können als strahlungshärtbare Komponente (C) eingesetzt werden. Weiterhin ist die Verwendung von Vinylethern ebenso möglich wie der Einsatz von ungesättigten Polyesterharzen.

Als strahlungshärtbare Verbindungen (C2), die neben der radikalisch polymerisierbaren Gruppe zusätzlich eine isocyanatreaktive Gruppe tragen, können die Folgenden verwendet werden: 2-Hydroxyethyl(meth)acrylat, 4-Hydroxybutyl(meth)acrylat, 2-Hydroxy-3-phenoxypropyl(meth)acrylat, 2-Hydroxypropyl(meth)acrylat, Polycaprolacton(meth)acrylat, Pentaerythritol-tri(meth)acrylat, und Dipentaerythritolpenta(meth)acrylat (DIPEPA). Auch hydroxygruppenterminierte Polybutadiene eignen sich als strahlungshärtbare und isocyanatreaktive Verbindung (C2).

Die vorgenannten strahlungshärtbaren Verbindungen können jeweils allein oder im Gemisch miteinander verwendet werden. Auch Mischungen der Verbindungen (C1) und (C2) sind im Sinne der Erfindung.

Soweit eine strahlungshärtbare Verbindung (C2) verwendet wird, die zusätzlich isocyanatreaktive Gruppen trägt, erfüllt diese gleichzeitig auch die Funktion der isocyanatreaktiven Komponente (B). Gemäß einer Ausführungsform der erfindungsgemäßen Masse kann die isocyanatreaktive Gruppen tragende strahlungshärtbare Verbindung (C2) die isocyanatreaktive Komponente (B) ganz oder teilweise ersetzen.

Die Anzahl und die Dichte an radikalisch polymerisierbaren Gruppen beeinflusst ferner die Flexibilität der mittels aktinischer Strahlung fixierten Masse. Bevorzugt weist die strahlungshärtbare Verbindung (C) eine mittlere Funktionalität von größer 1 auf, um eine quervernetzte Masse zu erhalten, welche eine verbesserte Formstabilität aufweist. Besonders bevorzugt beträgt die mittlere Funktionalität der strahlungshärtbaren Verbindung (C) in Bezug auf die radikalisch polymerisierbaren Gruppen 1,2 bis 5, weiter bevorzugt 1,2 bis 4, weiter bevorzugt 1,2 bis 3 und besonders bevorzugt 1,5 bis 2,5.

Der Anteil der strahlungshärtbaren Verbindung (C) in der härtbaren Masse beträgt bevorzugt 5 bis 80 Gewichtsprozent.

Besonders bevorzugt ist die strahlungshärtbare Verbindung ein (Meth)acrylat oder eine Allylverbindung und liegt in der erfindungsgemäßen Masse bevorzugt in einem Anteil von bis zu 50 Gew.-% vor, besonders bevorzugt in einem Anteil von 5 bis 30 Gew.-%.

### Komponente (D): Photoinitiator

Zusätzlich zur strahlungshärtbaren Verbindung (C) enthalten die erfindungsgemäßen Massen einen Photoinitiator (D) für die radikalische Polymerisation. Der Photoinitiator wird durch Bestrahlen mit aktinischer Strahlung aktiviert und löst dadurch die Polymerisation der strahlungshärtbaren Verbindung (C) aus.

Als Photoinitiator (D) können die üblichen, im Handel erhältlichen Verbindungen eingesetzt werden, wie beispielsweise α-Hydroxyketone, Benzophenon, α,α'-Diethoxyacetophenon, 4,4-Diethylaminobenzophenon, 2,2-Dimethoxy-2-phenyl-acetophenon, 4-Isopropylphenyl-2-hydroxy-2-propylketon, 1-Hydroxycyclohexylphenylketon, Isoamyl-p-dimethylaminobenzoat, Methyl-4-dimethylaminobenzoat, Methyl-o-benzoylbenzoat, Benzoin, Benzoinethylether, Benzoinisopropylether, Benzoinisobutylether, 2-Hydroxy-2-methyl-1-phenylpropan-1-on, 2-Isopropylthioxanthon, Dibenzosuberon, Ethyl-(2,4,6)-trimethylbenzoyl)-phenylphosphinat, Monoacylphosphinoxide, Phenyl-bis-(2,4,6-trimethylbenzoyl)-phosphinoxid und Bisacylphosphinoxide, wobei die genannten Photoinitiatoren jeweils allein oder in Kombination von zwei oder mehreren der genannten Verbindungen verwendet werden können.

Als Photoinitiatoren können beispielsweise die IRGACURE^{™}-Typen von BASF SE eingesetzt werden, so beispielsweise die Typen IRGACURE 184, IRGACURE 500, IRGACURE 1179, IRGACURE 2959, IRGACURE 745, IRGACURE 651, IRGACURE 369, IRGACURE 907, IRGACURE 1300, IRGACURE 819, IRGACURE 819DW, IRGACURE 2022, IRGACURE 2100, IRGACURE 784, IRGACURE 250, IRGACURE TPO und IRGACURE TPO-L. Ferner sind die DAROCUR^{™}-Typen von BASF SE verwendbar, so beispielsweise die Typen DAROCUR MBF, DAROCUR 1173, DAROCUR TPO und DAROCUR 4265.

Der in den erfindungsgemäßen Massen eingesetzte Photoinitiator kann vorzugsweise durch aktinische Strahlung einer Wellenlänge von 200 bis 600 nm, besonders bevorzugt 320 bis 480 nm, aktiviert werden. Bei Bedarf kann der Photoinitiator (D) mit einem geeigneten Sensibilisierungsmittel kombiniert werden.

Der Photoinitiator (D) liegt in den erfindungsgemäßen Massen vorzugsweise in einem Anteil von 0,01 bis 5 Gew.-% vor, bevorzugt in einem Anteil von höchstens 2 Gew.-%, jeweils bezogen auf das Gesamtgewicht der Masse.

### Komponente (E): Zusatzstoffe

Neben den Komponenten (A) bis (D) können die erfindungsgemäßen Massen weitere Zusatzstoffe (E) enthalten. Beispielhaft und nicht abschließend seien Katalysatoren, Zähigkeitsmodifikatoren wie Core-Shell-Partikel oder BlockCopolymere, Farbstoffe, Pigmente, Fluoreszenzmittel, Thixotropiermittel, Verdicker, Thermostabilisatoren, Stabilisatoren, Antioxidantien, Weichmacher, Füllstoffe, Flammschutzmittel, Korrosionsinhibitoren, Wasserfänger, Verdünnungsmittel, Verlaufs- und Benetzungsadditive, Haftvermittler und Kombinationen davon genannt.

Als Katalysatoren werden bevorzugt dem Fachmann bekannte Verbindungen verwendet, welche die Reaktion der isocyanatreaktiven Gruppen mit dem Polyisocyanat katalysieren. Beispiele für geeignete Katalysatoren sind insbesondere Metallkatalysatoren auf Basis von Zinn, Zink, Blei, Quecksilber oder Bismut, oder tertiäre Amine wie Triethylendiamin oder DBU. Des Weiteren können feste Epoxid-Amin-Addukte als Katalysatoren in den erfindungsgemäßen Massen verwendet werden, wie sie beispielsweise als latente Härter für Epoxidharze zum Einsatz kommen.

Als Verdünnungsmittel können grundsätzlich auch inerte organische Lösungsmittel verwendet werden, solange sie das feste Polyisocyanat nicht lösen. Bevorzugt ist die Masse allerdings frei von inerten organischen Lösungsmitteln, da die Verwendung solcher Lösungsmittel unter Umweltgesichtspunkten nachteilig und daher nicht bevorzugt ist. Grundsätzlich kann auch Wasser als Dispergiermedium verwendet werden. Allerdings wird damit ein aufwendiger Trocknungsschritt in der Verarbeitung der Masse notwendig, womit die Verwendung einer wässrigen Dispersion ebenfalls nicht bevorzugt ist.

Die Zusatzstoffe liegen in der härtbaren Masse bevorzugt in einem Anteil von 0 bis 80 Gewichtsprozent vor, bevorzugt in einem Anteil von 0 bis 50 Gewichtsprozent.

### Zusammensetzung der erfindungsgemäßen Massen

Die erfindungsgemäße Masse umfasst oder besteht bevorzugt aus den vorgenannten Komponenten (A) bis (D) sowie wenigstens einem der vorgenannten Zusatzstoffe (E).

Gemäß einer ersten bevorzugten Ausführungsform umfasst die erfindungsgemäße Masse folgende Komponenten:
(A) ein festes, mindestens difunktionelles Isocyanat mit einem Schmelzpunkt von mindestens 60 °C, das durch Umsetzung von 0,5 bis 15% der Isocyanatgruppen mit Polyaminen, Amidin- und/oder Guanidin-Verbindungen, Hydrazin, Alkylhydrazine und/oder Hydrazidverbindungen an seiner Oberfläche passiviert ist;
(B) ein Polyol mit einer mittleren Funktionalität von 1,4 - 3.
(C) eine strahlungshärtbare Verbindung mit einer radikalisch polymerisierbaren Gruppe und einer mittleren Funktionalität von 1,5 bis 3;
(D) einen Photoinitiator in einem Anteil von 0,01 bis 2 Gewichts%; und
(E) einen Katalysator für die Warmhärtung und wahlweise ein Thixotropiermittel.

Der Wassergehalt der härtbaren Masse wird vorzugsweise möglichst gering gehalten, da Wasser eine ähnlich hohe Reaktivität mit Isocyanatgruppen aufweist wie die Hydroxylgruppen der als isocyanatreaktive Komponente (B) verwendeten Polyole. Ein zu hoher Wasseranteil in der Masse kann daher zu Blasenbildung führen. Die Einstellung eines geringen Wassergehalts kann durch den Zusatz von Wasserfängern wie Vinyltrimethoxysilan erreicht werden, die als weitere Additive (E) zugesetzt werden können. Bevorzugt werden hydrophobe Polyole als isocyanatreaktive Komponente (B) eingesetzt, wie beispielsweise hydroxyterminierte Polybutadiene oder hydrierte, hydroxygruppenterminierte Polyolefine, die inhärent einen geringen Wassergehalt und eine geringe Hygroskopie aufweisen.

Besonders bevorzugt wird eine Mischung von zwei oder mehr Polyolen als isocyanatreaktive Komponente (B) eingesetzt, insbesondere eine Mischung aus wenigstens einem niedermolekularen und einem höhermolekularen Polyol. Die Härte und Flexibilität der erfindungsgemäßen Masse kann sehr gut über das Äquivalentgewicht der Polyole und deren Verhältnis zueinander eingestellt werden. Die Erzeugung von Hart- und Weichsegmenten durch Auswahl von kurz- und langkettigen Polyolen mit unterschiedlichem Molekulargewicht sind dem Fachmann aus der Polyurethanchemie bekannt. Insbesondere kann durch eine entsprechende Auswahl der langkettigen Polyole eine hohe Flexibilität bei niedrigen Temperaturen bzw. eine tiefe Glasübergangstemperatur eingestellt werden. Dazu sind Polyole mit einem Molekulargewicht von 2000 - 20000 g/mol geeignet, welche selbst eine niedrige Glasübergangstemperatur besitzen, wie beispielsweise Polyole auf Basis von Polyethern oder Polybutadienen.

Weiter bevorzugt wird das Polyol als isocyanatreaktive Komponente (B) zusammen mit einem Katalysator für Warmhärtung eingesetzt. Gut geeignet sind metallhaltige Katalysatoren auf Basis von Zinn, Zink, Blei, Quecksilber oder Bismut und/oder oder Katalysatoren auf Basis von tertiären Aminen wie DBU oder Triethylamin. Besonders bevorzugt wird Dibutylzinndilaurat als Katalysator eingesetzt. Der Katalysator begünstigt die Umsetzung des Polyols mit dem Isocyanat unter Bildung eines Polyurethannetzwerks.

Als strahlungshärtbare Verbindung (C) werden bevorzugt Urethan(meth)acrylate eingesetzt, da diese schnell radikalisch polymerisieren und gut verträglich mit den Polyolen sind. Gleichzeitig bleiben die Massen nach einer Bestrahlung mit aktinischer Strahlung ausreichend flexibel, so dass das Fügen eines zweiten Substrats ermöglicht wird und die Massen gut an das zweite Substrat anfließen.

Gemäß einer zweiten bevorzugten Ausführungsform werden Polythiole als isocyanatreaktive Komponente (B) verwendet. Die Polythiole weisen eine im Vergleich zu Alkoholen größere Reaktivität mit Isocyanatgruppen auf, insbesondere unter basischer Katalyse. Daher werden bevorzugt tertiäre Amine wie Triethylamin, DBU oder Epoxy-Amin-Addukte als Katalysatoren eingesetzt. Wegen der hohen Reaktivität der Polythiole kann auf zusätzliche Maßnahmen zur Reduzierung des Wassergehalts der Zusammensetzung verzichtet werden.

Die Thiole können nicht nur nukleophil an das Isocyanat der Komponente (A) addieren, sondern auch über einen Thiol-En-Mechanismus mit der strahlungshärtbaren Komponente (C) reagieren. Dadurch kann die Vernetzungsdichte weiter erhöht werden.

Gemäß einer dritten bevorzugten Ausführungsform werden Polyamine als isocyanatreaktive Komponente (B) eingesetzt. Polyamine weisen eine hohe Reaktivität gegenüber Isocyanatgruppen auf. Daher können die Polyamine auch ohne Verwendung eines Katalysators eingesetzt werden. Außerdem sind keine besonderen Maßnahmen zur Reduktion des Wassergehalts notwendig. Amine können auch in einer Nebenreaktion an Acrylatgruppen addieren, wodurch die Lagerstabilität der Masse beeinträchtigt werden kann. Bei Verwendung von Polyaminen als isocyanatreaktive Komponente (B) wird als strahlungshärtbare Verbindung (C) daher bevorzugt eine Verbindung mit radikalisch polymerisierbaren Methacrylatgruppen eingesetzt.

In allen beschriebenen Ausführungsformen liegt das molare Verhältnis zwischen den freien, nicht bereits passivierten Isocyanatgruppen in Komponente (A) und den isocyanatreaktiven Gruppen in Komponente (B) und wahlweise in Komponente (C2) zwischen 0,2 und 3, bevorzugt zwischen 0,4 und 2,5 und besonders bevorzugt zwischen 0,5 und 2.

### Eigenschaften der erfindungsgemäßen Massen

Die erfindungsgemäßen Massen sind bei Raumtemperatur flüssig und können einkomponentig formuliert werden. Durch die Auswahl der Komponenten (A) bis (D) und durch die Passivierung der isocyanathaltigen Komponente (A) sind die Massen auch bei Raumtemperatur über einen gewissen Zeitraum lagerstabil. Die Massen sind uneingeschränkt verarbeitbar, solange der Viskositätsanstieg nach Lagerung kleiner als 100 % beträgt. Die erfindungsgemäßen Massen erfüllen dieses Kriterium auch nach 7 Tagen, bevorzugt nach 14 Tagen Lagerung bei Raumtemperatur.

Die erfindungsgemäßen Massen sind außerdem durch Bestrahlen mit aktinischer Strahlung fixierbar, so dass in einem Fügeprozess die Form und Position des Klebstoffs und der Fügepartner genau eingestellt werden kann.

Gegenüber anderen lichtfixierbaren Massen wie beispielsweise kationisch polymerisierbaren Epoxidharzen oder aminisch härtenden Epoxiden bieten die erfindungsgemäßen Massen ferner den Vorteil, dass eine hohe Flexibilität bei tiefen Temperaturen und eine tiefe Glasübergangstemperatur eingestellt werden kann. Gegenüber radikalisch warmhärtenden Massen auf Basis von Peroxiden zeichnen sich die erfindungsgemäßen Massen durch ihre Unempfindlichkeit gegenüber Sauerstoffinhibierung bei der Warmhärtung aus, welche gerade bei miniaturisierten Verklebungen gefordert wird.

Die Vorteile der Lichtfixierung werden anhand der im Folgenden beschriebenen Verarbeitungsverfahren näher erläutert.

### Verarbeitungsverfahren unter Verwendung der erfindungsgemäßen Massen

Die erfindungsgemäßen Massen, welche mindestens die Komponenten (A) bis (D) umfassen, zeichnen sich dadurch aus, dass die auf ein Substrat applizierte Masse durch Bestrahlung in einen sogenannten B-Stage-Zustand überführt werden kann. In diesem Zustand besitzt die Masse eine ausreichende Form- und Konturstabilität, und kann somit ohne zu verfließen in nachgelagerten Prozessen verarbeitet werden.

Das Warmhärten der Masse muss nicht umgehend nach dem Bestrahlen mit aktinischer Strahlung erfolgen. Falls die erfindungsgemäße Masse im B-Stage-Zustand fern von Umwelteinflüssen gehalten wird, wie beispielsweise Feuchtigkeit, Schmutz und Temperaturen oberhalb der Raumtemperatur, kann auch nach mindestens sieben Tagen problemlos noch eine Warmhärtung erfolgen, wahlweise nach Zuführen und Fügen eines zweiten Substrats an die bestrahlte Masse.

Die erfindungsgemäßen Massen gestatten somit die Durchführung von industriellen Fertigungsprozessen, bei denen die härtbare Masse in einem Batch-Prozess über Dosierverfahren wie beispielsweise Sieb- oder Schablonendruck vorab auf eine Vielzahl von Bauteilen aufgebracht und die Masse auf den Bauteilen durch Bestrahlen mit aktinischer Strahlung in einen B-Stage-Zustand überführt wird, in dem ein Verfließen ausgeschlossen ist. Danach können weitere Bauteile zur Klebestelle zugeführt und im Anschluss ein abschließender Warmhärtungsschritt durchgeführt werden. Die erfindungsgemäßen Massen erlauben damit die zeitliche und räumliche Abtrennung eines Ofenprozesses für die Warmhärtung von den restlichen Fertigungsschritten. Damit lässt sich der Durchsatz bei Bestückungsprozessen beispielsweise in der Elektronikindustrie erhöhen. Anstatt mehrerer Warmhärtungsschritte kann ein einziger abschließender Ofenprozess angewendet werden.

Ein entsprechendes Verfahren zum Fügen, Vergießen oder Beschichten von Substraten unter Verwendung der erfindungsgemäßen Massen umfasst folgende Schritte:
(a) Dosieren der Masse auf ein erstes Substrat;
(b) Bestrahlen der Masse mit aktinischer Strahlung;
(c) wahlweise Zuführen eines zweiten Substrats unter Bildung eines Substratverbundes, wobei das zweite Substrat mit der bestrahlten Masse in Kontakt gebracht wird; und
(d) Warmhärten der bestrahlten Masse auf dem Substrat und/oder im Substratverbund durch Erwärmen auf eine Temperatur von mindestens 60 °C.

Zwischen den Schritten (b) und (c) oder (b) und (d) kann eine Wartezeit von mindestens 7 Tagen eingehalten werden.

Bei Durchführung des obigen Verfahrens als Fügeverfahren kann das zugeführte zweite Substrat bevorzugt ohne einen dauerhaften Anpressdruck während der Warmhärtung mit dem ersten Substrat verklebt werden. Auch ohne zusätzlichen Anpressdruck ist mit den erfindungsgemäßen Massen während der Warmhärtung ein sicheres Anfließen der Masse an das zweite Substrat möglich. Durch die vorangegangene Lichtfixierung wird bei der anschließenden Warmhärtung in Schritt (d) ein Einsinken des zweiten Substrats in die Masse verhindert.

Bei Verwendung der erfindungsgemäßen Massen für tiefe Vergüsse werden als Komponente (C) bevorzugt strahlungshärtbare Verbindungen (C2) verwendet, die zusätzlich isocyanatreaktive Gruppen tragen. Diese können während der Warmhärtung zusätzlich in das polymere Netzwerk eingebaut werden.

Gemäß einer weiteren bevorzugten Ausführungsform wird das Verarbeitungsverfahren als Fügeverfahren durchgeführt, bei dem das Bestrahlen der erfindungsgemäßen Masse nach dem Zuführen des zweiten Substrats erfolgt. Diese Ausführungsform des Verfahrens bietet den Vorteil, dass die Bauteile vor dem Warmhärtungsschritt durch Bestrahlung mit aktinischer Strahlung in ihrer Position fixiert werden können. Ein entsprechendes Verfahren zum Fügen von Substraten unter Verwendung der erfindungsgemäßen Massen umfasst bevorzugt folgende Schritte:
(a) Dosieren der Masse auf ein erstes Substrat;
(b) Zuführen eines zweiten Substrats unter Bildung eines Substratverbundes, wobei das zweite Substrat mit der Masse in Kontakt gebracht wird;
(c) Bestrahlen der Masse mit aktinischer Strahlung; und
(d) Warmhärten der bestrahlten Masse in dem Substratverbund durch Erwärmen auf eine Temperatur von mindestens 60 °C.

Mit Hilfe des beschriebenen Verfahrens lässt sich eine hohe Positionstreue der gefügten Bauteile bis zur endgültigen Aushärtung realisieren. Auf konventionelle Fixierhilfen, die in der Praxis bei miniaturisierten Bauteilen nicht einsetzbar sind oder einen unzumutbaren Mehraufwand bedeuten, kann so verzichtet werden.

Ein nach dem beschriebenen Verfahren gefügtes und fixiertes Bauteil kann auch bei schräger Montage sicher an seiner Position gehalten werden. Auch bei Bauteilen, die von aktinischer Strahlung nicht durchdrungen werden können, kann mit dem beschriebenen Verfahren unter Verwendung der erfindungsgemäßen Massen eine Fixierung der Kehlnähte durch aktinische Strahlung erfolgen.

Die Bedingungen und das Vorgehen für die beschriebenen Verfahrensschritte werden im Folgenden näher erläutert.

### a) Dosieren

Die erfindungsgemäße Masse kann in einer beliebigen gewünschten Form aufgetragen werden. Dabei sind alle gängigen Dosiermethoden wie beispielsweise Nadeldosierung, Showerheaddosierung, Jetting, Sieb- oder Schablonendruck oder Pintransfer geeignet.

### b) Bestrahlen mit aktinischer Strahlung

Die in den oben beschriebenen Verfahren durchgeführte Bestrahlung erfolgt typischerweise mit Licht einer zum gewählten Photoinitiator passenden Wellenlänge, insbesondere mit Licht einer Wellenlänge von 200 bis 600 nm, bevorzugt von 320 bis 480 nm. Besonders bevorzugt ist die Verwendung von energiesparenden LED-Lampen, die Licht mit einer Wellenlänge im Bereich von 365 nm bis 405 nm abgeben. Die Bestrahlung der Masse führt zu einer Vernetzung an der bestrahlten Oberfläche der Masse, die stabil genug ist, um eine Formstabilität der Masse bei den für die Warmhärtung verwendeten hohen Temperaturen zu gewährleisten. Ein gefügtes Bauteil oder ein Substratverbund kann durch Bestrahlen der Masse im Bereich der Kehlnaht an seiner Position gehalten werden. Weiterhin ist die Festigkeit der bestrahlten, lichtfixierten Masse ausreichend hoch, um ein nach dem Bestrahlen zugeführtes zweites Bauteil während der Warmhärtung zu tragen und ein Einsinken in die Masse zu verhindern.

Die Eindringtiefe der aktinischen Strahlung und somit auch die Dicke der lichtfixierten Schicht kann über die Bestrahlungsdosis, die Menge und Art der eingesetzten Füllstoffe und Zusatzstoffe und die verwendete Wellenlänge gesteuert werden.

### c) Warmhärten

Unabhängig von Art und Ausmaß der Lichtfixierung durch Bestrahlen muss zur vollständigen Aushärtung der erfindungsgemäßen Massen ein Warmhärteschritt durchgeführt werden.

Das Warmhärten erfolgt je nach verwendeter isocyanatreaktiver Komponente (B) bevorzugt bei einer Temperatur in einem Bereich von etwa 60 bis 200 °C.

Das Aushärten der erfindungsgemäßen Massen durch Zufuhr von Wärme wird dadurch initiiert, dass das feste Isocyanat bei erhöhter Temperatur unter Aufbruch der Harnstoffhülle gelöst wird oder schmilzt. Um eine schnelle und vollständige Vernetzung zu erreichen, wird die Masse bevorzugt auf eine Temperatur von mindestens 80 °C erwärmt, weiter bevorzugt mindestens 100 °C und besonders bevorzugt, mindestens 130 °C.

Der Energieeintrag für die Warmhärtung kann über Konvektion, beispielsweise in einem Umluftofen, durch Wärmeleitung, beispielsweise mittels einer Heizplatte oder Thermode, oder mittels elektromagnetischer Strahlung, beispielsweise mittels IR-Strahlungsquellen, LASER, Mikrowellen oder Induktion, erfolgen.

### Anwendungsbeispiele für die gehärteten erfindungsgemäßen Massen

Die gehärteten Massen können je nach Formulierung ein sehr niedriges E-Modul über einen breiten Temperaturbereich hinweg zeigen und/oder eine sehr tiefe Glasübergangstemperatur T_{g} von -40°C oder kleiner aufweisen. Sie sind in diesem Fall auch bei tiefen Temperaturen sehr flexibel und eignen sich für industrielle Anwendungen, bei denen auch bei niedrigen Temperaturen keine Spannungen zwischen einzelnen Bauteilen erwünscht sind.

Ferner können durch die Lichtfixierung auch größere härtbare Schichtdicken in Fügeanwendungen erzielt werden. Die reine Warmhärtung führt bei den im Stand der Technik beschriebenen Massen zu einem Einsinken oder zu einem Verrutschen der Bauteile.

Insbesondere die Kombination von hoher Flexibilität bei tiefen Temperaturen mit einer hohen Klebschichtdicke bietet eine sehr gute Entkopplung empfindlicher elektronischer Bauteile von schädlichen Umwelteinflüssen wie beispielsweise Temperaturwechseln oder Stößen.

Spezifische Anwendungen, bei denen diese Eigenschaften der erfindungsgemäßen Massen besonders gefordert werden, umfassen die Fertigung von MEMS (Microelectromechanical Systems)-Sensoren. Die erfindungsgemäßen Massen eignen sich hier besonders bevorzugt für Die-Attach Anwendungen.

### Verwendete Messverfahren und Definitionen

### Bestrahlung

Zur Bestrahlung wurden die jeweiligen Massen mit einer LED-Lampe DELOLUX 20 / 400 der Firma DELO Industrie Klebstoffe bei einer Wellenlänge von 400 nm mit einer Intensität von 200 ± 20 mW/cm² bestrahlt.

### Raumtemperatur

Raumtemperatur ist definiert als 23 °C ± 2 °C.

### Aushärtung

"Vernetzung" oder "Aushärtung" werden definiert als Polymerisations- Additions- oder Kondensationsreaktion über den Gelpunkt hinaus. Der Gelpunkt ist der Punkt, an dem das Speichermodul G' gleich dem Verlustmodul G" wird.

### Viskosität

Die Viskosität wurde mit einem Rheometer Physica MCR302 der Firma Anton Paar mit einem standardisierten Messkegel PP20 bei 23 °C mit einem 200 µm Spalt gemessen und bei einer Scherrate von 10/Sekunde bestimmt. Zur Beurteilung der Lagerstabilität bei Raumtemperatur wurde die Viskositätsmessung nach 7 oder 14 Tagen wiederholt. Änderungen der Viskosität von weniger als 50% werden im Folgenden mit sehr gut (++) beurteilt, von weniger als 75% mit gut (+), von weniger als 100% mit ausreichend (o), von 100 bis 200% mit mangelhaft (-) und von mehr als 200% mit ungenügend (--).

### Bestimmung der Glasübergangstemperatur

Eine Probe der Masse wurde in eine Probenform gegossen und unter beidseitigem Bestrahlen (je 60 s) und Warmhärten (30 min bei 130°C) ausgehärtet. Der erhaltene Probekörper (45 x 10 x 2,2 mm, 25 mm Messabstand) wurde in einem Rheometer Physica MCR301 der Firma Anton Paar unter Verwendung einer Temperierkammer oszillierend (Deformation 0,01%, Frequenz 1 Hz) über einen Temperaturgradienten (-80°C bis +60°C, 2 K/min) vermessen. Als Glasübergangstemperatur wird die Temperatur beim Maximum des Verlustmoduls G" definiert.

### Ablauftest

Auf einer der schmalen Seiten eines Glasquaders (20 x 20 x 5 mm) wurde eine Klebstoffraupe aufgetragen, und der Glasquader wurde mit der schmalen Seite anstoßend an die schmale Kante eines Aluminiumblechs (100 x 25 mm) gefügt. Anschließend wurde eine Probe belichtet, und eine zweite Probe blieb unbelichtet. Beide Proben wurden in einem auf 130°C vorgeheizten Umluftofen so in eine Vorrichtung eingesetzt, dass das Aluminiumblech eine schräge Ebene (45°) bildete, an deren oberen Ende der Glasquader saß. Nach 30 min Verweildauer wurden die Proben aus dem Ofen herausgenommen und die Strecke ausgemessen, die sich der Glasquader auf dem Aluminiumblech der Schwerkraft folgend bewegt hatte. Dabei wurden Werte von < 2 mm als ausgezeichnet (++), von 2 bis 5 mm als gut (+), von 5 bis 10 mm als noch ausreichend (o), von > 10 mm als mangelhaft (-) und ein Abfall des Glasquaders als ungenügend (--) beurteilt.

### Einsinktest

Auf einem Glasobjektträger wurden jeweils zwei parallele Raupen (ca. 3 mm breit, 2 mm hoch) der Masse mit einem Abstand von 6 mm aufgetragen. Anschließend wurde eine Probe belichtet (5 s), die andere nicht. Ein Quader (20 x 20 x 5 mm) aus Aluminium wurde aufgelegt und im Umluftofen (30 min bei 130 °C) warmgehärtet. Nach dem Abkühlen wurde durch den Glasobjektträger der verbliebene Abstand der beiden Raupen unter dem Aluminiumquader ausgemessen. Dabei gelten Abstände von 4 mm und größer als ausgezeichnet (++), Abstände von 3 - 4 mm als gut (+), von 1 - 3 mm als ausreichend (o), von 0 - 1 mm als mangelhaft (-) und ein komplettes Verfließen der Raupen unter dem Eigengewicht des Aluminiumquaders als ungenügend (--).

### Herstellungsbeispiele

Zur Herstellung der erfindungsgemäßen härtbaren Massen wurde zunächst die isocyanatreaktive Komponente mit dem Passivierungsmittel gemischt. Danach wurde das mikronisierte, feste Isocyanat dazugegeben, und das Gemisch wurde mittels eines Vakuumkneters innig vermischt. Anschließend wurden unter Ausschluss von Licht mit Wellenlängen kleiner 500nm wahlweise weitere isocyanatreaktive Komponenten, die strahlungshärtbaren Komponenten, die Photoinitiatoren, sowie alle weiteren Zusatzstoffe (E) wie Katalysatoren, Stabilisatoren oder Thixotropiermittel zugesetzt. Feste Zusatzstoffe können auch als Vorlösung oder Suspension in einem flüssigen Rezepturbestandteil eingebracht werden.

Die gesamte Masse wurde innig mit einem Vakuumkneter gemischt und in lichtundurchlässige Kartuschen abgefüllt.

Zur Herstellung der härtbaren Massen gemäß den Vergleichsbeispielen wurde auf ein analoges Verfahren zurückgegriffen.

Die zur Herstellung der härtbaren Massen eingesetzten Komponenten sind in der folgenden Tabelle 1 angegeben:

**Tabelle 1: Komponenten der härtbaren Massen**

| Handelsname | Konstitution | Hersteller |
|---|---|---|
| Thanecure T9 | mikronisiertes TDI-Uretdion | TSE Industries |
| Jeffamin D-400 | Polyetheramin | Huntsman Corporation |
| Jeffamin T-5000 | Polyetheramin | Huntsman Corporation |
| Caradol ET 250-04 | trifunktionelles Polyetherpolyol | Shell Chemicals |
| Krasol HLBH-P3000 | hydriertes, hydroxygruppenterminiertes Polyolefin, Mn = 3100 g/mol | Cray Valley |
| PolyBd R45 HTLO | hydroxygruppenterminiertes Polybutadien | Cray Valley |
| Ethacure 100 | Diethyltoluoldiamin | Albemarle Corporation |
| Karenz MT-PE 1 | Pentaerythritol-tetrakis-(3-mercaptobutylat) | Showa Denko |
| Bisomer TMPTMA | Trimethylolpropantrimethacrylat | BASF SE |
| TAICROS | Triallylisocyanurat | Evonik Industries |
| Irgacure TPO-L | Ethyl-(2,4,6-trimethylbenzoyl)-phenyl phosphin at | BASF SE |
| DBTL | Dibutylzinndilaurat | Sigma-Aldrich |
| Triethylamin | basisches Amin | Sigma-Aldrich |
| Pyrogallol | Pyrogallol | Sigma-Aldrich |
| Urethanacrylat-1 | Difunktionelles Urethanacrylat; erhältlich aus der Umsetzung eines hydrierten, hydroxy-terminierten Polyolefins mit Diisocyanat und 4-Hydroxy-butylacrylat | Eigene Herstellung |

Nach der oben beschriebenen allgemeinen Herstellvorschrift wurden härtbare Massen gemäß den erfindungsgemäßen Beispielen 1 bis 4 und Vergleichsbeispiel 5 hergestellt. Die Zusammensetzung der jeweiligen härtbaren Massen ist in der nachfolgenden Tabelle 2 angegeben.

**Tabelle 2. Zusammensetzung der härtbaren Massen**

| Beispiel | | 1 | 2 | 3 | 4 | 5 (Vergleich) |
|---|---|---|---|---|---|---|
| | | | | | | |
| Festes Isocyanat (A) | Thanecure T9 | 26,0 | 35,0 | 13,9 | 10,2 | 11,41 |
| Passivierungs mittel | Jeffamin D-400 | 1,4 | 0,9 | 0,8 | 0,5 | 0,56 |
| Isocyanatreaktive Komponente (B) | Jeffamin T-5000 | 48,4 | 0 | 0 | 0 | 0 |
| | Krasol HLBH-P3000 | 0 | 0 | 0 | 74,7 | 83,52 |
| | Caradol ET 250-04 | 0 | 0 | 0 | 2,6 | 2,91 |
| | Ethacure 100 | 10,7 | 0 | 0 | 0 | 0 |
| | Karenz MT-PE 1 | 0 | 49,4 | 2,7 | 0 | 0 |
| | PolyBd R45 HTLO | 0 | 0 | 40,0 | 0 | 0 |
| Strahlungshärtende Komponente (C) | Urethanacrylat-1 | 0 | 0 | 0 | 10,4 | 0 |
| | Bisomer TMPTMA | 10 | 0 | 0 | 0 | 0 |
| | TAICROS | 0 | 13,0 | 0 | 0 | 0 |
| | PolyBd R45 HTLO | 0 | 0 | 39,7 | 0 | 0 |
| Photoinitiator (D) | Irgacure TPO-L | 0,5 | 0,5 | 0,5 | 0,5 | 0,5 |
| Zusatzstoffe (E) | DBTL | 0 | 0 | 0,1 | 0,1 | 0,1 |
| | Triethylamin | 0 | 0,1 | 0 | 0 | 0 |
| | Pyrogallol | 0 | 0,1 | 0,3 | 0 | 0 |
| | Thixotropiermittel | 3,0 | 1,0 | 2,0 | 1,0 | 1,0 |

### Testergebnisse

Mit den so hergestellten härtbaren Massen wurden die oben beschriebenen Testverfahren zur Ermittlung der Formbeständigkeit während der Warmhärtung (Ablauftest), der Lichtfixierfestigkeit mittels Einsinktest und der Lagerstabilität durchgeführt. Ferner wurde der Glasübergangspunkt der ausgehärteten Massen gemäß den Beispielen 1 bis 4 bestimmt. Die so ermittelten Eigenschaften der ausgehärteten Massen sind in der nachfolgenden Tabelle 3 angegeben.

**Tabelle 3: Eigenschaften der härtbaren Massen**

| Beispiel | 1 | | 2 | | 3 | | 4 | | 5 (Vergleich) |
|---|---|---|---|---|---|---|---|---|---|
| Bestrahlung | ja | nein | ja | nein | ja | nein | ja | nein | ja |
| Ablauftest | ++ | -- | ++ | -- | ++ | -- | + | -- | -- |
| Einsinktest | ++ | -- | ++ | -- | ++ | -- | ++ | -- | -- |
| Glasübergangs -temperatur [°C] | -62 | n.b. | +52 | n.b. | -74 | n.b. | -50 | n.b. | n.b. |
| Viskositätsänderung 7d RT | ++ | | ++ | | ++ | | ++ | | ++ |
| Viskositätsänderung 14d RT | ++ | | + | | ++ | | ++ | | ++ |

| | | | | | | | | | |
|---|---|---|---|---|---|---|---|---|---|
| n.b. = nicht bestimmt. | | | | | | | | | |

Die Massen der Beispiele 1 bis 4 wurden jeweils einmal ohne Bestrahlung und einmal unter Anwendung des erfindungsgemäßen Verfahrens dosiert, fixiert und geprüft. Der Ablauftest zeigt die vorteilhafte Eigenschaft der erfindungsgemäßen Massen, die nach der Lichtfixierung auch während der Warmhärtung eine ausgezeichnete Formstabilität der Massen aufweisen und eine hervorragende Positionstreue der gefügten Bauteile gewährleisten. Sobald die Möglichkeit der Fixierung durch Bestrahlen mit aktinischer Strahlung nicht genutzt wurde, waren die Ergebnisse mangelhaft bis ungenügend. Der Vergleichsmasse gemäß Beispiel 5 fehlt eine strahlungshärtbare Komponente (C), sodass die Masse trotz der Anwendung des erfindungsgemäßen Verfahrens im Ablauftest ungenügend abschnitt.

Auch im Einsinktest zeigen die erfindungsgemäßen Massen unter dem Eigengewicht des Fügepartners eine hervorragende Formtreue bei Anwendung einer Lichtfixierung. Ohne Bestrahlung sind die Ergebnisse mangelhaft bis ungenügend. Auch das Vergleichsbeispiel 5 zeigt im Einsinktest ein ungenügendes Ergebnis.

Die erfindungsgemäßen Massen zeigen trotz des Zusatzes der strahlungshärtbaren Komponente (C) ferner eine gute Lagerstabilität bei Raumtemperatur. Es konnte zudem gezeigt werden, dass erfindungsgemäße Massen mit einer sehr niedrigen Glasübergangstemperatur von -40 °C oder kleiner formuliert werden können.

## Patentansprüche

1. Einkomponentige, bei Raumtemperatur flüssige und lagerstabile, sowie durch aktinische Strahlung fixierbare und Wärme härtbare Masse, umfassend
a) ein mindestens difunktionelles festes Isocyanat mit einer passivierten Oberfläche und mit einem Schmelzpunkt von mindestens 40 °C;
b) eine isocyanatreaktive Verbindung, die aus der Gruppe der Alkohole, Amine und Thiole sowie deren Mischungen ausgewählt ist;
c) eine strahlungshärtbare Verbindung mit wenigstens einer radikalisch polymerisierbaren Gruppe; und
d) mindestens einen Photoinitiator für die radikalische Polymerisation.

2. Masse nach Anspruch 1, **dadurch gekennzeichnet, dass** das mindestens difunktionelle feste Isocyanat (A) an seiner Oberfläche mit einem Passivierungsmittel umgesetzt ist, das aus der Gruppe der Polyamine, Amidin- und/oder Guanidin-Verbindungen, Hydrazin, Alkylhydrazine und/oder Hydrazidverbindungen ausgewählt ist.

3. Masse nach Anspruch 2, **dadurch gekennzeichnet, dass** 0,1 bis 25 mol% der Isocyanatgruppen der Komponente (A) mit dem Passivierungsmittel umgesetzt sind, bevorzugt 0,5 bis 15 mol% und besonders bevorzugt 1 bis 10 mol%.

4. Masse nach einem der vorhergehenden Ansprüche, **dadurch gekennzeichnet, dass** das mindestens difunktionelle Isocyanat einen mittleren Teilchendurchmesser von höchstens 40 µm aufweist, bevorzugt höchstens 10 µm.

5. Masse nach einem der vorhergehenden Ansprüche, **dadurch gekennzeichnet, dass** die isocyanatreaktive Komponente (B) eine mittlere Funktionalität von 1,4 bis 5 aufweist, bevorzugt von 1,7 bis 4.

6. Masse nach einem der vorhergehenden Ansprüche, **dadurch gekennzeichnet, dass** die strahlungshärtbare Verbindung (C) mit Bezug auf die radikalisch polymerisierbare Gruppe eine mittlere Funktionalität von 1,2 bis 5 aufweist, bevorzugt von 1,2 bis 3.

7. Masse nach einem der vorhergehenden Ansprüche, **dadurch gekennzeichnet, dass** das Molverhältnis der freien nicht passivierten Isocyanatgruppen von Komponente (A) zu den isocyanatreaktiven Gruppen der Komponente (B) von 0,4 bis 2,5 beträgt, bevorzugt von 0,5 bis 2.

8. Masse nach einem der vorhergehenden Ansprüche, **dadurch gekennzeichnet, dass** die warmgehärtete Masse eine Glasübergangstemperatur kleiner -20°C aufweist, bevorzugt kleiner -40°C.

9. Masse nach einem der vorhergehenden Ansprüche, **dadurch gekennzeichnet, dass** die strahlungshärtbare Verbindung (C) sowohl eine strahlungshärtbare Gruppe als auch eine isocyanatreaktive Gruppe trägt, wobei die strahlungshärtbare Verbindung (C), die sowohl eine strahlungshärtbare Gruppe als auch eine isocyanatreaktive Gruppe trägt, bevorzugt die isocyanatreaktive Komponente (B) ganz oder teilweise ersetzt.

10. Einkomponentige Masse nach einem der vorhergehenden Ansprüche, **dadurch gekennzeichnet, dass** die Masse folgende Komponenten umfasst:
(A) ein festes, mindestens difunktionelles Isocyanat mit einem Schmelzpunkt von mindestens 60 °C, das durch Umsetzung von 0,5 bis 15% der Isocyanatgruppen mit Polyaminen, Amidin- und/oder Guanidin-Verbindungen, Hydrazin, Alkylhydrazine und/oder Hydrazidverbindungen an seiner Oberfläche passiviert ist;
(B) ein Polyol mit einer mittleren Funktionalität von 1,4 - 3;
(C) eine strahlungshärtbare Verbindung mit einer radikalisch polymerisierbaren Gruppe und einer mittleren Funktionalität von 1,5 bis 3;
(D) einen Photoinitiator in einem Anteil von 0,01 bis 2 Gew.-%; und
(E) einen Katalysator für die Warmhärtung und wahlweise ein Thixotropiermittel.

11. Verfahren zum Fügen von Substraten unter Verwendung einer härtbaren Masse gemäß einem der vorhergehenden Ansprüche, welches die folgenden Schritte umfasst:
a) Dosieren der Masse auf ein erstes Substrat;
b) Zuführen eines zweiten Substrates unter Bildung eines Substratverbundes, wobei das zweite Substrat mit der härtbaren Masse in Kontakt gebracht wird;
c) Bestrahlen der Masse mit aktinischer Strahlung; und
d) Warmhärten der bestrahlten Masse auf dem Substrat oder in dem Substratverbund durch Erwärmen auf eine Temperatur von 60 bis 200 °C, bevorzugt mindestens 80 °C und besonders bevorzugt mindestens 100 °C.

12. Verfahren zum Fügen, Vergießen und/oder Beschichten von Substraten unter Verwendung einer härtbaren Masse gemäß einem der vorhergehenden Ansprüche 1 bis 10, welches die folgenden Schritte umfasst:
a) Dosieren der Masse auf ein erstes Substrat;
b) Bestrahlen der Masse mit aktinischer Strahlung;
c) Wahlweise Zuführen eines zweiten Substrates unter Bildung eines Substratverbundes, wobei das zweite Substrat mit der bestrahlten Masse in Kontakt gebracht wird; und
d) Warmhärten der bestrahlten Masse in dem Substratverbund durch Erwärmen auf eine Temperatur von 60 bis 200 °C, bevorzugt mindestens 80 °C und besonders bevorzugt mindestens 100 °C.

13. Verfahren nach Anspruch 12, **dadurch gekennzeichnet, dass** zwischen den Schritten (b) und (c) oder den Schritten (b) und (d) eine Wartezeit von mindestens 7 Tagen eingehalten werden kann.

14. Verwendung der Masse gemäß einem der Ansprüche 1 bis 10 als Kleb- oder Dichtstoff für das Fügen, Vergießen, Abdichten und/oder Beschichten von Substraten, bevorzugt für Substrate in MEMS-Bauteilen.

## Claims

1. A one-part, actinic radiation-fixable and heat-curable composition that is liquid and storage-stable at room temperature, comprising
a) an at least bifunctional solid isocyanate having a passivated surface and a melting point of at least 40 °C;
b) an isocyanate-reactive compound selected from the group of alcohols, amines and thiols, and mixtures thereof;
c) a radiation-curable compound having at least one radically polymerizable group; and
d) at least one photoinitiator for radical polymerization.

2. The composition according to Claim 1, **characterized in that** the at least bifunctional solid isocyanate (A) is reacted at its surface with a passivation agent selected from the group of polyamines, amidine and/or guanidine compounds, hydrazine, alkyl hydrazines and/or hydrazide compounds.

3. The composition according to Claim 2, **characterized in that** 0.1 to 25 mol% of the isocyanate groups of component (A) is reacted with the passivation agent, preferably 0.5 to 15 mol% and particularly preferably 1 to 10 mol%.

4. The composition according to any of the previous claims, **characterized in that** the at least bifunctional isocyanate has a mean particle diameter of at most 40 µm, preferably at most 10 µm.

5. The composition according to any of the previous claims, **characterized in that** the isocyanate-reactive component (B) has a mean functionality of 1.4 to 5, preferably 1.7 to 4.

6. The composition according to any of the previous claims, **characterized in that** the radiation-curable compound (C) has a mean functionality of 1.2 to 5, preferably 1.2 to 3, relative to the radically polymerizable group.

7. The composition according to any of the previous claims, **characterized in that** the molar ratio of the free, non-passivated isocyanate groups of component (A) to the isocyanate-reactive groups of component (B) is from 0.4 to 2.5, preferably from 0.5 to 2.

8. The composition according to any of the previous claims, **characterized in that** the heat-cured composition has a glass transition temperature of less than - 20 °C, preferably less than -40 °C.

9. The composition according to any of the previous claims, **characterized in that** the radiation-curable compound (C) carries both a radiation-curable group and an isocyanate-reactive group, the radiation-curable compound (C) that carries both a radiation-curable group and an isocyanate-reactive group preferably replacing the isocyanate-reactive component (B) completely or partially.

10. The one-part composition according to any of the previous claims, **characterized in that** the composition comprises the following components:
(A) a solid, at least bifunctional isocyanate having a melting point of at least 60 °C that is passivated at its surface by reaction of 0.5 to 15 % of the isocyanate groups with polyamines, amidine and/or guanidine compounds, hydrazine, alkyl hydrazines and/or hydrazide compounds;
(B) a polyol having a mean functionality of 1.4-3;
(C) a radiation-curable compound having a radically polymerizable group and a mean functionality of 1.5 to 3;
(D) a photoinitiator in a proportion of 0.01 to 2 % by weight; and
(E) a catalyst for heat curing, and optionally a thixotropic agent.

11. A method of joining of substrates using a curable composition according to any of the previous claims, comprising the following steps:
a) dosing the composition onto a first substrate;
b) feeding a second substrate to form a substrate composite, with the second substrate brought into contact with the curable composition;
c) irradiating the composition with actinic radiation; and
d) heat-curing the irradiated composition on the substrate or in the substrate composite by heating to a temperature of 60 to 200 °C, preferably at least 80 °C and particularly preferably at least 100 °C.

12. A method of joining, casting and/or coating of substrates using a curable composition according to any of the previous Claims 1 to 10, comprising the following steps:
a) dosing the composition onto a first substrate;
b) irradiating the composition with actinic radiation;
c) optionally feeding a second substrate to form a substrate composite, with the second substrate brought into contact with the irradiated composition; and
d) heat-curing the irradiated composition in the substrate composite by heating to a temperature of 60 to 200 °C, preferably at least 80 °C and particularly preferably at least 100 °C.

13. The method according to Claim 12, **characterized in that** a waiting time of at least 7 days can be kept between steps (b) and (c) or steps (b) and (d).

14. Use of the composition according to any of Claims 1 to 10 as an adhesive or sealant for the joining, casting, sealing and/or coating of substrates, preferably of substrates in MEMS parts.

## Revendications

1. Masse à un composant, liquide à température ambiante et stable au stockage, et fixable par rayonnement actinique et thermodurcissable, comprenant
a) un isocyanate solide au moins difonctionnel présentant une surface passivée et un point de fusion d'au moins 40°C ;
b) un composé réactif aux isocyanates, choisi dans le groupe des alcools, des amines et des thiols et de leurs mélanges ;
c) un composé durcissable par rayonnement comprenant au moins un groupe polymérisable par voie radicalaire ; et
d) au moins un photoinitiateur pour la polymérisation par voie radicalaire.

2. Masse selon la revendication 1, **caractérisée en ce que** l'isocyanate solide au moins difonctionnel (A) réagit à sa surface avec un agent de passivation choisi dans le groupe des polyamines, des composés d'amidine et/ou de guanidine, d'hydrazine, des alkylhydrazines et/ou des composés d'hydrazide.

3. Masse selon la revendication 2, **caractérisée en ce que** 0,1 à 25% en moles des groupes isocyanate du composant (A) réagissent avec l'agent de passivation, de préférence 0,5 à 15% en moles et de manière particulièrement préférée 1 à 10% en moles.

4. Masse selon l'une des revendications précédentes, **caractérisée en ce que** l'isocyanate au moins difonctionnel présente un diamètre moyen des particules de 40 µm au maximum, de préférence de 10 µm au maximum.

5. Masse selon l'une des revendications précédentes, **caractérisée en ce que** le composant réactif aux isocyanates (B) présente une fonctionnalité moyenne de 1,4 à 5, de préférence de 1,7 à 4.

6. Masse selon l'une des revendications précédentes, **caractérisée en ce que** le composé durcissable par rayonnement (C) présente une fonctionnalité moyenne par rapport au groupe polymérisable par voie radicalaire de 1,2 à 5, de préférence de 1,2 à 3.

7. Masse selon l'une des revendications précédentes, **caractérisée en ce que** le rapport molaire entre les groupes isocyanate libres non passivés du composant (A) et les groupes réactifs aux isocyanates du composant (B) est de 0,4 à 2,5, de préférence de 0,5 à 2.

8. Masse selon l'une des revendications précédentes, **caractérisée en ce que** la masse thermodurcie présente une température de transition vitreuse inférieure à -20°C, de préférence inférieure à -40°C.

9. Masse selon l'une des revendications précédentes, **caractérisée en ce que** le composé durcissable par rayonnement (C) porte à la fois un groupe durcissable par rayonnement et un groupe réactif aux isocyanates, le composé durcissable par rayonnement (C) qui porte à la fois un groupe durcissable par rayonnement et un groupe réactif aux isocyanates remplaçant de préférence l'ensemble ou une partie du composant réactif aux isocyanates (B).

10. Masse à un composant selon l'une des revendications précédentes, **caractérisée en ce que** la masse comprend les composants suivants :
(A) un isocyanate solide au moins difonctionnel, qui présente un point de fusion d'au moins 60°C et qui est passivé à sa surface par réaction de 0,5 à 15% des groupes isocyanate avec des polyamines, des composés d'amidine et/ou de guanidine, de l'hydrazine, des alkylhydrazines et/ou des composés d'hydrazide ;
(B) un polyol présentant une fonctionnalité moyenne de 1,4 à 3 ;
(C) un composé durcissable par rayonnement comportant un groupe polymérisable par voie radicalaire et présentant une fonctionnalité moyenne de 1,5 à 3 ;
(D) un photoinitiateur dans une proportion de 0,01 à 2% en poids ; et
(E) un catalyseur pour le thermodurcissement et, facultativement, un agent thixotrope.

11. Procédé d'assemblage de substrats en utilisant une masse durcissable selon l'une des revendications précédentes, comprenant les étapes suivantes :
a) dosage de la masse sur un premier substrat ;
b) amenée d'un deuxième substrat de manière à former un composite de substrats, le deuxième substrat étant mis en contact avec la masse durcissable ;
c) irradiation de la masse avec un rayonnement actinique ; et
d) durcissement à chaud de la masse irradiée sur le substrat ou dans le composite de substrats par chauffage à une température de 60 à 200°C, de préférence d'au moins 80°C et de manière particulièrement préférée d'au moins 100°C.

12. Procédé d'assemblage, de compoundage et/ou de revêtement de substrats en utilisant une masse durcissable selon l'une des revendications précédentes 1 à 10, comprenant les étapes suivantes :
a) dosage de la masse sur un premier substrat ;
b) irradiation de la masse avec un rayonnement actinique ;
c) amenée facultative d'un deuxième substrat de manière à former un composite de substrats, le deuxième substrat étant mis en contact avec la masse irradiée ; et
d) durcissement à chaud de la masse irradiée dans un composite de substrats par chauffage à une température de 60 à 200°C, de préférence d'au moins 80°C et de manière particulièrement préférée d'au moins 100°C.

13. Procédé selon la revendication 12, **caractérisé en ce qu'**un délai d'attente d'au moins 7 jours peut être respecté entre les étapes (b) et (c) ou les étapes (b) et (d).

14. Utilisation de la masse selon l'une des revendications 1 à 10 en tant que colle ou matériau d'étanchéité pour l'assemblage, le compoundage, l'étanchement et/ou le revêtement de substrats, de préférence pour des substrats dans des composants MEMS.
